# DEMANDE DE BREVET EUROPEEN

(11) **EP 1 983 609 A1**
(43) Date de publication de la demande: **22.10.2008**
(21) Numéro de dépôt: 08290340.2
(22) Date de dépôt: 08.04.2008
(51) Int. Cl.: H01Q 1/32, H01Q 5/00, H01Q 23/00, H01Q 9/42

(54) **Antenne multibande comprenant un support diélectrique, un aérien et un circuit électronique portés par le support**

(30) Priorité: 19.04.2007 FR 0754567
(71) Demandeur: Societe de Composants Electriques, 78410 Aubergenville (FR)
(72) Inventeur: Belmont, Romain, 27220 Fresney (FR); Bachelet, Didier, 78270 Blaru (FR); Viratelle, Didier, 78960 Voisins le Bretonneux (FR)
(74) Mandataire: Kedinger, Jean-Paul

(57) **Abrégé**

La présente invention se rapporte à une antenne multibande (1) pour véhicule automobile comprenant au moins un aérien (20) porté par un support diélectrique (10) monté sur un véhicule et un circuit électronique (5) comportant un module de réception/émission (30) adapté pour recevoir/émettre un signal électromagnétique ayant une fréquence située dans au moins une bande de fréquences déterminée et un module (40) pour adapter l'aérien à la bande de fréquences déterminée du signal reçu/émis, le circuit électronique étant relié à un appareil récepteur/émetteur monté dans le véhicule, caractérisée en ce que le circuit électronique (5) est monté sur le support diélectrique (10) et forme une seule pièce avec celui-ci.

## Description

La présente invention concerne une antenne multibande pour véhicule automobile.

Les antennes destinées à être montées à bord des véhicules automobiles de tourisme ou utilitaires sont de plus en plus nombreuses, en raison de nouvelles applications multimédia telles que la radio numérique, la télévision embarquée, la téléphonie cellulaire ou le guidage par satellites. Un autre aspect faisant augmenter le nombre des antennes est l'amélioration de la qualité de réception d'un même service. Il est ainsi courant de multiplier les antennes, ce qui complique nettement la conception des circuits de réception/émission et de traitement du signal (filtre, amplification).

De plus en plus souvent, l'antenne traditionnelle en forme de « fouet » accrochée au-dessus du toit du véhicule est jumelée avec une antenne cachée dont l'aérien est généralement réalisé sur un circuit imprimé ou sérigraphié sur le verre de la lunette arrière ou des vitres de custode. Cependant, il subsiste un problème important concernant la connexion de cet aérien au circuit électronique. Cette connexion varie en particulier selon la position d'intégration du boîtier renfermant le circuit électronique et la position de l'aérien. Elle est réalisée à l'aide d'un fil simple ou d'un câble coaxial ou d'un câble bifilaire.

Cependant, en ce qui concerne le fil simple, sa longueur est limitée à quelques centimètres uniquement. En effet, au-delà d'une dizaine de centimètres, des parasites apparaissent et la transmission des signaux est perturbée et de mauvaise qualité. Concernant le câble coaxial ou le bifilaire, la longueur peut passer à environ 1 mètre mais des problèmes d'implantation se posent, notamment en raison du fait qu'il existe déjà de nombreux faisceaux de câbles dans un véhicule et que les constructeurs en ajoutent sans cesse.

Ainsi, l'intégration à la fois de l'aérien et du boîtier nécessite la présence d'un emplacement approprié sur un des montants du véhicule, sur la tablette arrière, voire sur une paroi du coffre, afin de pouvoir réaliser également la reprise de masse sur le véhicule. Trop de parties à implanter.

Un but de la présente invention est donc de résoudre les problèmes cités précédemment à l'aide d'une solution simple à mettre en oeuvre, fiable et peu coûteuse par suppression du câble de liaison et des connecteurs.

Ainsi, la présente invention a pour objet une antenne multibande pour véhicule automobile comprenant au moins un aérien porté par un support diélectrique monté sur un véhicule et un circuit électronique comportant un module de réception/émission adapté pour recevoir/émettre un signal électromagnétique ayant une fréquence située dans au moins une bande de fréquences déterminée et un module d'adaptation pour adapter l'aérien à la bande de fréquences déterminée du signal reçu/émis, le circuit électronique étant relié à un appareil récepteur/émetteur monté dans le véhicule, caractérisée en ce que le circuit électronique est monté sur le support diélectrique et forme une seule pièce avec celui-ci.

De préférence, le circuit électronique est protégé par un revêtement en matière plastique surmoulée.

Avantageusement l'aérien est adapté pour recevoir/émettre des signaux électromagnétiques dans une bande de fréquences sélectionnée pour la réception d'un signal radio analogique FM, dans une bande de fréquences sélectionnée pour la réception d'un signal radio analogique AM et dans l'une au moins des fréquences parmi :
- une bande de fréquences sélectionnée pour la réception d'un signal de télévision numérique ;
- une bande de fréquences sélectionnée pour la réception d'un signal de radio numérique DAB en bande L et/ou une bande de fréquences sélectionnée pour la réception d'un signal de radio numérique DAB en bande III,
- au moins une bande de fréquences sélectionnée pour la réception/l'émission d'un signal de téléphonie cellulaire GSM.

Selon des modes de réalisation préférés, l'antenne selon la présente invention peut comprendre en outre l'une au moins des caractéristiques suivantes :
- lorsqu'elle est adaptée pour la réception de la télévision numérique, le circuit électronique comprend un seul amplificateur prévu pour traiter à la fois le signal de télévision numérique et le signal de radio analogique FM ;
- lorsqu'elle est adaptée pour la réception de la télévision numérique, elle comprend un aérien conçu pour la réception du signal de radio analogique AM/FM et un aérien distinct conçu pour la réception du signal de télévision numérique ;
- lorsqu'elle est adaptée pour la réception de la radio numérique DAB en bande L et en bande III, le circuit électronique comprend un seul amplificateur prévu pour traiter à la fois le signal de radio numérique DAB en bande III et le signal de radio analogique FM, et un amplificateur distinct prévu pour traiter le signal de radio numérique DAB en bande L ;
- lorsqu'elle est adaptée pour la réception de la radio numérique DAB en bande L et en bande III, elle comprend un aérien conçu pour la réception à la fois du signal de radio analogique AM/FM et du signal de radio numérique DAB en bande III, et un aérien distinct conçu pour la réception du signal de radio numérique DAB en bande L ;
- lorsqu'elle est adaptée pour la réception/l'émission du signal de téléphonie cellulaire GSM, elle comprend un aérien conçu pour la réception du signal de radio analogique AM/FM et un aérien distinct conçu pour la réception/l'émission du signal de téléphonie cellulaire GSM ;
- lorsqu'elle est adaptée pour la réception de la radio numérique DAB en bande L et en bande III et pour la réception de la télévision numérique, elle comprend un aérien conçu pour la réception à la fois du signal de radio analogique AM/FM et du signal de radio numérique DAB en bande III, un aérien conçu pour la réception du signal de télévision numérique et un aérien conçu pour la réception du signal de radio numérique DAB en bande L ;
- elle comporte un composant électronique selfique monté en série avec l'aérien pour optimiser la résonance et adapter l'impédance de l'antenne à 50 Ohms dans au moins une bande de fréquences déterminée, et de préférence dans deux bandes de fréquences distinctes ;
- le support diélectrique est en fibre de verre et l'aérien est constitué par un fil conducteur en cuivre photogravé sur le support ;
- le support diélectrique est rectangulaire et comporte des premiers et seconds cotés transversaux mesurant chacun environ 35 mm, des premier et second côtés longitudinaux mesurant chacun environ 130 mm, son épaisseur étant d'environ 0,8 mm tandis que la largeur du fil photogravé est d'environ 0,4 mm ;
- l'aérien comporte deux parties disposées symétriquement de part et d'autre de l'axe longitudinal de symétrie du support et son fil forme des méandres constitués par un motif comprenant, successivement, un premier tronçon transversal, parallèle au premier côté transversal du support, prenant son origine avant l'axe longitudinal et dirigé vers le premier côté longitudinal, un premier tronçon longitudinal parallèle et adjacent au premier côté longitudinal du support et dirigé vers le second côté transversal, un premier tronçon transversal parallèle et adjacent au second côté transversal du support et dirigé vers le second côté longitudinal, un premier tronçon longitudinal parallèle et adjacent au second côté longitudinal du support et dirigé vers le premier côté transversal, un premier tronçon transversal parallèle au premier coté transversal du support et prenant fin avant l'axe longitudinal, une première portion de tronçon longitudinal parallèle et adjacente à l'axe longitudinal et partant vers le centre du support, un second tronçon transversal parallèle au premier coté transversal du support, dirigé vers le second côté longitudinal et se terminant avant le premier tronçon longitudinal parallèle au second côté longitudinal, un second tronçon longitudinal parallèle au second côté longitudinal du support, dirigé vers le second côté transversal et se terminant avant le premier tronçon transversal parallèle au second côté transversal, un second tronçon transversal parallèle au second côté transversal du support, dirigé vers le premier côté longitudinal et se terminant avant le premier tronçon longitudinal parallèle au premier côté longitudinal, un second tronçon longitudinal parallèle au premier côté longitudinal du support, dirigé vers le premier côté transversal et se terminant avant le premier tronçon transversal parallèle au premier côté transversal, un second tronçon transversal parallèle au premier côté transversal du support, dirigé vers le second côté longitudinal et prenant fin avant l'axe longitudinal, une seconde portion de tronçon longitudinal parallèle et adjacente à l'axe longitudinal et partant vers le centre du support, l'ensemble des seconds tronçons longitudinaux et transversaux étant situé à l'intérieur de l'ensemble des premiers tronçons longitudinaux et transversaux et chaque motif se répétant plusieurs fois en direction du centre du support ;
- l'aérien est relié au circuit électronique par un tronçon d'entrée sensiblement aligné avec l'axe longitudinal du support, et l'espace entre deux tronçons adjacents de l'aérien mesure environ 0,37 mm ;
- le circuit électronique comprend trois composants de filtrage formant un T de manière à adapter l'impédance de l'antenne à 50 Ohms sur toute la bande de fréquences du signal de radio analogique FM ; et
- l'appareil récepteur/émetteur est choisi dans le groupe constitué par un autoradio à réception analogique et/ou numérique, un téléphone cellulaire, un appareil de positionnement global par satellites, un équipement à la norme bluetooth et un récepteur de télévision embarqué.

L'invention va maintenant être décrite plus en détail en référence à des modes de réalisation particuliers donnés à titre d'illustration uniquement et représentés sur les figures annexées dans lesquelles :
- la figure 1 est une vue de face d'une antenne multibande conforme à la présente invention et comprenant un support, un aérien et une carte électronique ; et
- les figures 2 à 10 sont des exemples de réalisation illustrant différents types d'utilisation de cette antenne.

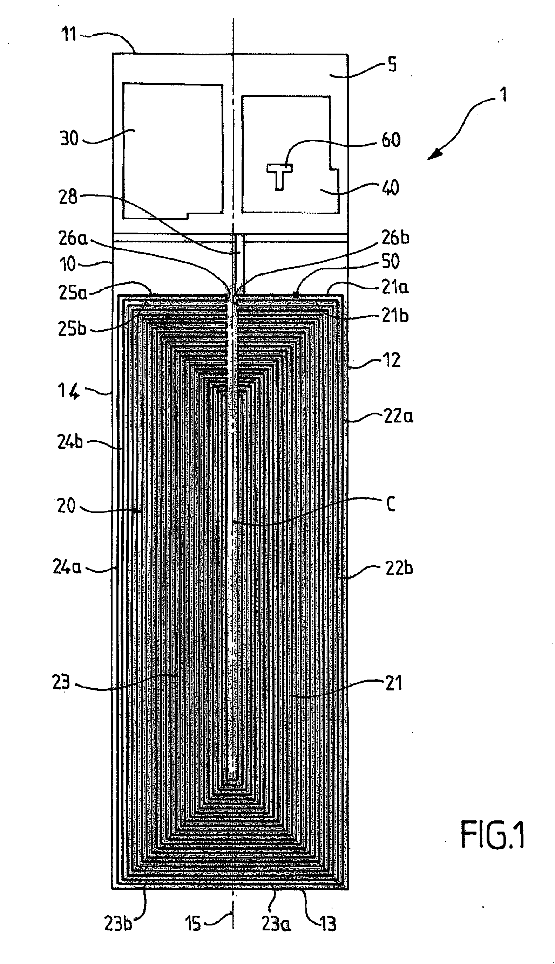

La figure 1 représente de manière schématisée une antenne 1 pour véhicule automobile de tourisme ou utilitaire. Cette antenne, de type actif dans l'exemple représenté, peut être fixée sur une partie du véhicule, telle que la tôle de la carrosserie, par exemple proche du pare-brise avant ou de la lunette arrière, ou une pièce en matière plastique.

L'antenne 1 comprend un support diélectrique 10, par exemple en fibres de verre, sur lequel sont disposés au moins un aérien 20 (décrit plus en détail ultérieurement) et un circuit électronique 5 comportant un module de réception/émission 30 adapté pour recevoir/émettre un signal électromagnétique ayant une fréquence située dans au moins une bande de fréquences déterminée et un module d'adaptation 40 conçu pour adapter l'aérien 20 à la bande de fréquences déterminée du signal reçu/émis.

Le circuit électronique 5 est relié à un récepteur/émetteur (non représenté) installé dans le véhicule, par exemple un autoradio, et est monté directement sur le support diélectrique 10 pour former une seule pièce avec celui-ci.

Le circuit électronique 5 est également protégé par un revêtement en matière plastique surmoulée (non visible sur la figure car transparent).

L'aérien 20 est constitué par un fil conducteur en cuivre photogravé sur le support 10.

Le support diélectrique 10 est rectangulaire et comporte des premiers et seconds cotés transversaux 11 et 13 mesurant chacun environ 35 mm, des premier et second côtés longitudinaux 12 et 14 mesurant chacun environ 130 mm. L'épaisseur du support 10 est d'environ 0,8 mm tandis que la largeur du fil photogravé est d'environ 0,4 mm.

L'aérien 20 comporte deux parties 21 et 23 disposées symétriquement de part et d'autre de l'axe longitudinal de symétrie 15 du support 10 et son fil forme des méandres constitués par un motif comprenant, successivement :
- un premier tronçon transversal 21a, parallèle au premier côté transversal 11 du support 10, prenant son origine avant l'axe longitudinal 15 et dirigé vers le premier côté longitudinal 12,
- un premier tronçon longitudinal 22a parallèle et adjacent au premier côté longitudinal 12 du support 10 et dirigé vers le second côté transversal 13,
- un premier tronçon transversal 23a parallèle et adjacent au second côté transversal 13 du support et dirigé vers le second côté longitudinal 14,
- un premier tronçon longitudinal 24a parallèle et adjacent au second côté longitudinal 14 du support et dirigé vers le premier côté transversal 11,
- un premier tronçon transversal 25a parallèle au premier coté transversal 11 du support et prenant fin avant l'axe longitudinal 15,
- une première portion de tronçon longitudinal 26a parallèle et adjacente à l'axe longitudinal 15 et partant vers le centre C du support,
- un second tronçon transversal 25b parallèle au premier coté transversal 11 du support, dirigé vers le second côté longitudinal 14 et se terminant avant le premier tronçon longitudinal 24a parallèle au second côté longitudinal 14,
- un second tronçon longitudinal 24b parallèle au second côté longitudinal 14 du support, dirigé vers le second côté transversal 13 et se terminant avant le premier tronçon transversal 23a parallèle au second côté transversal 13,
- un second tronçon transversal 23b parallèle au second côté transversal 13 du support, dirigé vers le premier côté longitudinal 12 et se terminant avant le premier tronçon longitudinal 22a parallèle au premier côté longitudinal 12,
- un second tronçon longitudinal 22b parallèle au premier côté longitudinal 12 du support, dirigé vers le premier côté transversal 11 et se terminant avant le premier tronçon transversal 21a parallèle au premier côté transversal 11,
- un second tronçon transversal 21b parallèle au premier côté transversal 11 du support, dirigé vers le second côté longitudinal 14 et prenant fin avant l'axe longitudinal 15,
- une seconde portion 26b de tronçon longitudinal parallèle et adjacente à l'axe longitudinal 15 et partant vers le centre C du support,
- l'ensemble des seconds tronçons longitudinaux et transversaux 21b, 22b, 23b, 24b étant situé à l'intérieur de l'ensemble des premiers tronçons longitudinaux et transversaux 21a, 22a, 23a, 24a et chaque motif se répétant au total douze fois en direction du centre C du support 10.

L'aérien 20 est relié au circuit électronique 5 par l'intermédiaire d'un tronçon d'entrée 28 sensiblement aligné avec l'axe longitudinal 15 du support 10. L'espace entre deux portions longitudinales ou transversales est d'environ 0,37 mm, ce qui permet une bonne répartition des courants surfaciques.

L'antenne comporte également un composant électronique selfique 50 monté en série avec l'aérien 20 sur l'un des tronçon de la portion 21 pour optimiser la résonance et adapter l'impédance de l'antenne à 50 Ohms dans au moins une bande de fréquences déterminée, et de préférence dans deux bandes de fréquences distinctes telles que les bandes FM et AM. Ainsi, le gain maximum de l'antenne 1 passe à une fréquence inférieure avec la présence de cette self 50, évitant ainsi de rallonger les dimensions de l'antenne. Pour la bande de fréquence allant de 80 MHz à 110 MHz (radio analogique FM), ce composant selfique 50 n'apporte pas de pertes significatives dans le gain de l'aérien mesuré. Le composant selfique 50 peut également servir à créer une bande de résonance supérieure à celle de la radio analogique FM, par exemple pour l'application multifonction radio-téléphonie. Ainsi, en trouvant la bonne valeur de composant, une résonance est créée à 96 Mhz et 900 Mhz. La deuxième bande de fréquences de téléphonie est obtenue par le circuit électronique faisant filtre à 1800 Mhz.

L'adaptation d'impédance à 50 Ohms sur toute la bande de fréquence entre 80 MHz et 110 MHz se fait à l'aide d'un circuit 60 comprenant trois composants formant un T.

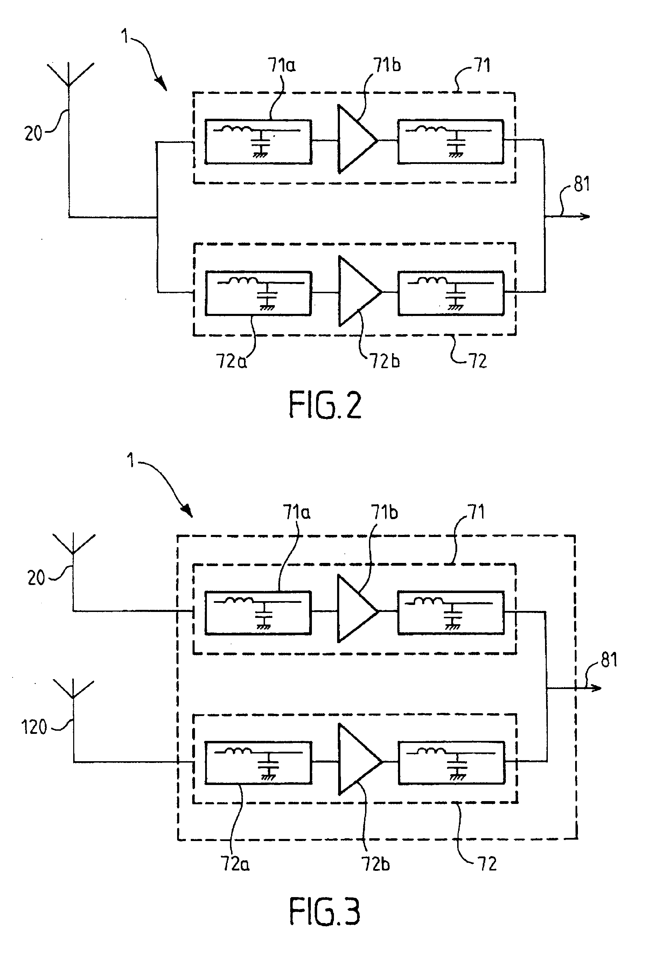

La figure 2 montre un premier schéma électronique d'utilisation possible de l'antenne 1 conforme à la présente invention. Selon cette première application, il s'agit simplement d'utiliser l'antenne 1 pour la réception d'un signal de radio analogique AM (bande de fréquences allant de 140 à 1710 kHz) et d'un signal de radio analogique FM (bande de fréquences allant de 76 à 108 MHz).

Pour cela, l'antenne 1 comporte un unique aérien 20 relié à deux circuits électroniques indépendants 71 et 72 prévus sur le support 10. Le premier circuit électronique 71 comporte un adaptateur d'impédance 71a et un amplificateur 71b pour la réception du signal radio FM tandis que le second circuit électronique 72 comporte un adaptateur d'impédance 72a et un amplificateur 72b pour la réception du signal radio AM. En sortie, l'antenne 1 comporte un unique câble 81 pour acheminer le signal radio AM/FM à l'appareil de réception.

Il est également possible d'utiliser ce même schéma électronique d'antenne pour la radio numérique (appelée DRM) à la place de la radio AM. La seule différence est que le circuit électronique d'amplification doit avoir de bonnes performances dans la bande de fréquences allant de 140kHz à 20 MHz.

La figure 3 montre un deuxième schéma électronique d'utilisation possible de l'antenne 1 conforme à la présente invention. Selon cette deuxième application, l'antenne 1 présente deux aériens distincts 20 et 120 disposés sur le même support 10. Le premier aérien 20 est relié à un premier circuit électronique 71 et le second aérien 120 est relié à un second circuit électronique 72. Le premier circuit électronique 71 comporte un adaptateur d'impédance 71a et un amplificateur 71b pour la réception du signal radio FM tandis que le second circuit électronique 72 comporte un adaptateur d'impédance 72a et un amplificateur 72b pour la réception du signal radio AM. En sortie, l'antenne 1 comporte un unique câble 81 pour transmettre le signal radio AM/FM à l'appareil de réception.

D'autres applications multimédia sont de plus en plus souvent demandées dans le domaine automobile. Ce sont principalement la téléphonie mobile (bande 900 MHz, bande 1800 MHz et bande 2100 Mhz), la réception radio numérique terrestre DAB en bande III (217-230 MHz) et en bande L (1452 à 1492 MHz), la télévision numérique terrestre DVB-H (470 MHz à 870 MHz), la télévision analogique (47 MHz à 800 MHz). Ces applications indépendantes et fonctionnant à des fréquences différentes augmentent le nombre d'antennes. La présente invention propose ainsi, dans les modes de réalisation qui suivent, de combiner plusieurs de ces fonctions sur la même antenne.

Pour cela, l'invention consiste en une antenne 1 multibande multifonctions portée par un même support diélectrique. La particularité de cette antenne est qu'elle ne comporte qu'un seul élément comprenant à la fois l'électronique (adaptation d'impédance et amplification) et le ou les aériens. Il évite ainsi aux constructeurs de devoir intégrer dans le véhicule, à divers endroits parfois incompatibles entre eux ou difficiles d'accès, l'aérien, le boîtier électronique et la liaison entre les deux.

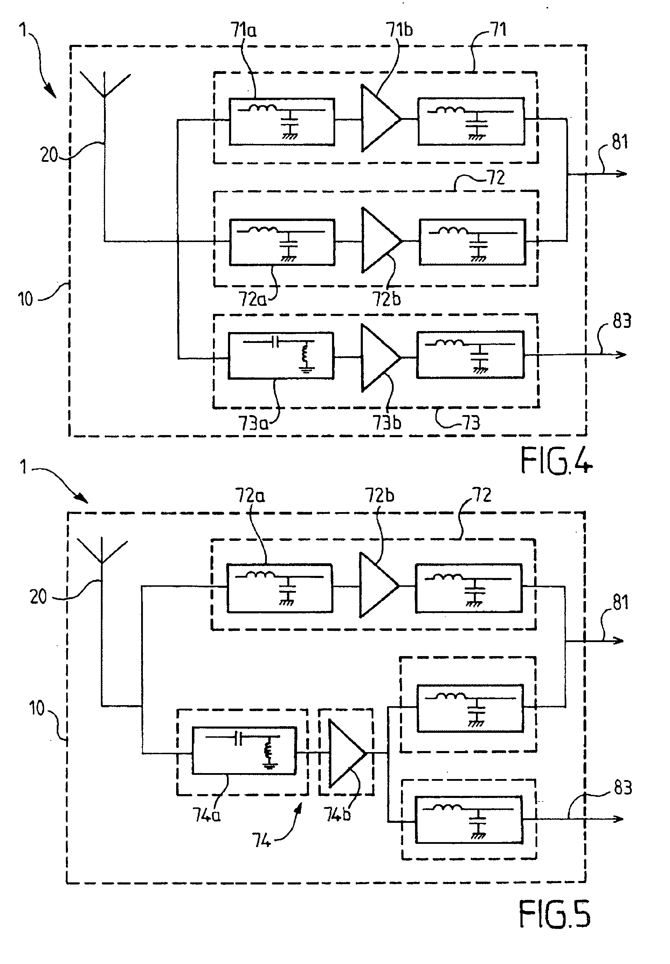

La figure 4 montre un troisième schéma électronique d'utilisation possible de l'antenne 1 conforme à la présente invention. Selon cette troisième application, l'antenne 1 comporte un seul aérien 20 qui permet la réception à la fois de la radio analogique FM, de la radio analogique AM et de la télévision numérique terrestre DVB-H, aux fréquences déjà citées. L'aérien est relié à trois circuits électroniques indépendants 71, 72 et 73 comportant respectivement un adaptateur d'impédance 71a et un amplificateur 71b pour la réception du signal radio FM, un adaptateur d'impédance 72a et un amplificateur 72b pour la réception du signal radio AM et un adaptateur d'impédance 73a et un amplificateur 73b pour la réception du signal de télévision numérique terrestre DVB-H. En sortie, l'antenne 1 présente un câble 81 pour la radio AM/FM et un câble 83 pour la télévision DVB-H.

La figure 5 montre un quatrième schéma électronique d'utilisation possible de l'antenne 1 conforme à la présente invention. Selon cette quatrième application, l'antenne 1 comporte un seul aérien 20 qui permet la réception à la fois de la radio analogique FM, de la radio analogique AM et de la télévision numérique terrestre en DVB-H, aux fréquences déjà citées. L'aérien 20 est relié à deux circuits électroniques indépendants 72 et 74 comportant respectivement un adaptateur d'impédance 72a et un amplificateur 72b pour la réception du signal radio AM, et un adaptateur d'impédance 74a et un amplificateur 74b pour la réception du signal radio FM et du signal de télévision numérique terrestre DVB-H. En sortie, l'antenne 1 présente un câble 81 pour la radio AM/FM et un câble 83 pour la télévision DVB-H.

Ainsi, cette solution d'utiliser un seul amplificateur à la fois pour la radio FM et la télévision DVB-H permet de réduire le nombre d'éléments et donc les coûts.

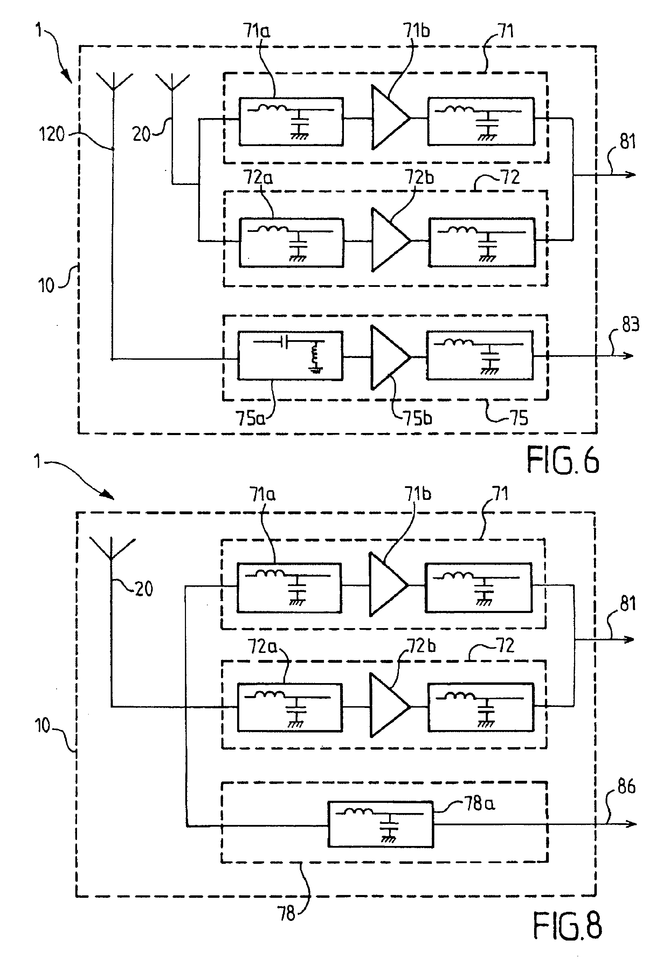

La figure 6 montre un cinquième schéma électronique d'utilisation possible de l'antenne 1 conforme à la présente invention. Selon cette cinquième application, l'antenne 1 comporte un premier aérien 20 qui permet la réception à la fois de la radio analogique FM, de la radio analogique AM et un second aérien 120 qui permet la réception de la télévision numérique terrestre DVB-H, aux fréquences déjà citées. Le premier aérien 20 est relié à deux circuits électroniques 71 et 72 comportant respectivement un adaptateur d'impédance 71a et un amplificateur 71b pour la réception du signal radio FM et un adaptateur d'impédance 72a et un amplificateur 72b pour la réception du signal radio AM. Le second aérien 120 est relié à un unique circuit électronique 75 comportant un adaptateur d'impédance 75a et un amplificateur 75b pour la réception du signal de télévision numérique terrestre DVB-H. En sortie, l'antenne 1 comporte un câble 81 pour la radio AM/FM et un câble 83 pour la télévision DVB-H.

Dans ce mode de réalisation, les deux aériens 20 et 120 sont imbriqués et leurs dimensions optimisées pour obtenir le fonctionnement optimal dans les bandes de fréquences FM et télévision.

Certains constructeurs fournissent en option la possibilité de recevoir la radio numérique terrestre DAB en bande III et en bande L. Ce système de réception est en effet en pleine expansion. Afin d'éviter la diversification des produits, la présente invention propose un seul système d'antenne multifonctions.

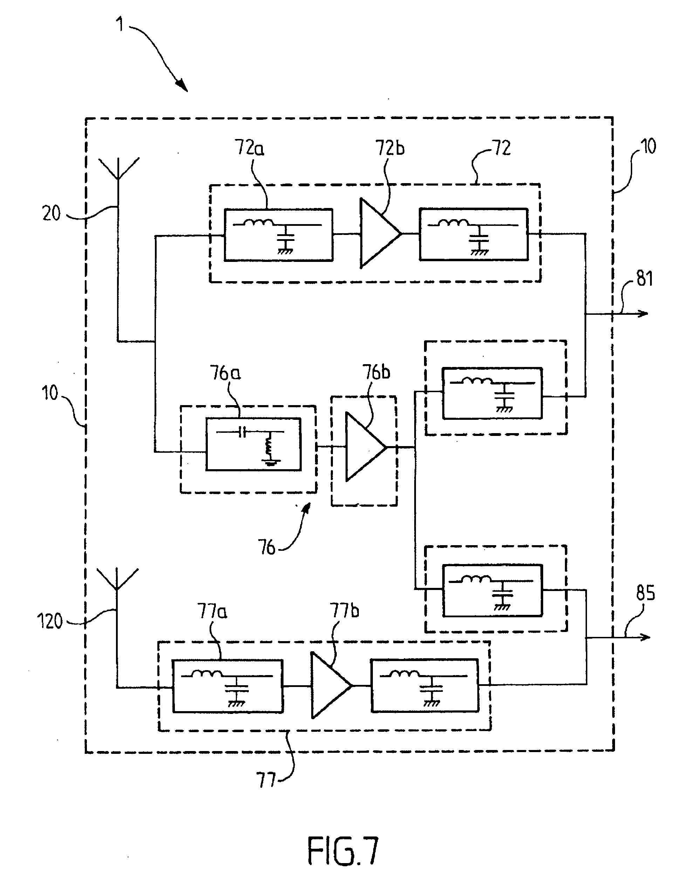

Ainsi, la figure 7 montre un sixième schéma électronique d'utilisation possible de l'antenne 1 conforme à la présente invention. Selon cette sixième application, l'antenne 1 comporte un premier aérien 20 qui permet la réception à la fois de la radio analogique FM, de la radio analogique AM et de la radio numérique terrestre DAB en bande III, et un second aérien 120 qui permet la réception de la radio numérique DAB en bande L, aux fréquences déjà citées. Le premier aérien 20 est relié à deux circuits électroniques 72 et 76 comportant respectivement un adaptateur d'impédance 72a et un amplificateur 72b pour la réception du signal radio AM et un adaptateur d'impédance 76a et un amplificateur 76b pour la réception du signal de radio FM et du signal radio numérique DAB en bande III. Le second aérien 120 est relié à un unique circuit électronique 77 comportant un adaptateur d'impédance 77a et un amplificateur 77b pour la réception du signal radio numérique DAB en bande L. En sortie, l'antenne 1 présente un câble 81 pour la radio AM/FM et un câble 85 pour la radio numérique DAB en bande III et L.

Dans ce mode de réalisation, les deux aériens 20 et 120 sont imbriqués et leurs dimensions optimisées pour obtenir le fonctionnement optimal dans les bandes de fréquences de la radio analogique et dans les bandes de fréquences de la radio numérique.

L'application de téléphonie fonctionne en réception mais également en émission. L'antenne 1 ne comporte dans ce cas pas d'amplification pour le téléphone mais un circuit électronique permettant d'adapter l'aérien à 50 Ohms à la fois dans les bandes de fréquence 900 Mhz et 1800 Mhz.

Ainsi, la figure 8 montre un septième schéma électronique d'utilisation possible de l'antenne 1 conforme à la présente invention. Selon cette septième application, l'antenne 1 comporte un seul aérien 20 qui permet la réception de la radio analogique AM/FM et l'émission/réception d'un signal de téléphonie cellulaire GSM (900 Mhz ou 1800 Mhz). L'aérien 20 est relié à trois circuits électroniques indépendants 71, 72 et 78 comportant respectivement un adaptateur d'impédance 71a et un amplificateur 71b pour la réception du signal radio FM, un adaptateur d'impédance 72a et un amplificateur 72b pour la réception du signal radio AM et un adaptateur d'impédance 78a pour l'émission/réception du signal de téléphonie cellulaire GSM. En sortie, l'antenne 1 présente un câble 81 pour la radio AM/FM et un câble 86 pour la téléphonie cellulaire.

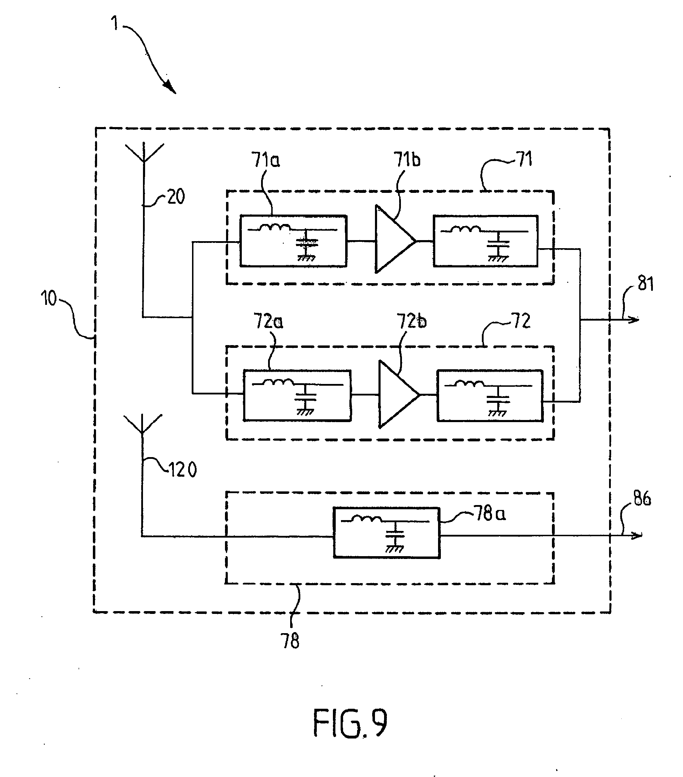

De la même façon que pour l'application de télévision numérique terrestre DVB-H, il est possible de concevoir deux aériens distincts 20 et 120, l'un pour la radio AM/FM et l'autre pour la téléphonie cellulaire GSM. La figure 9 illustre ce huitième mode de réalisation qui ne nécessite pas de plus amples détails.

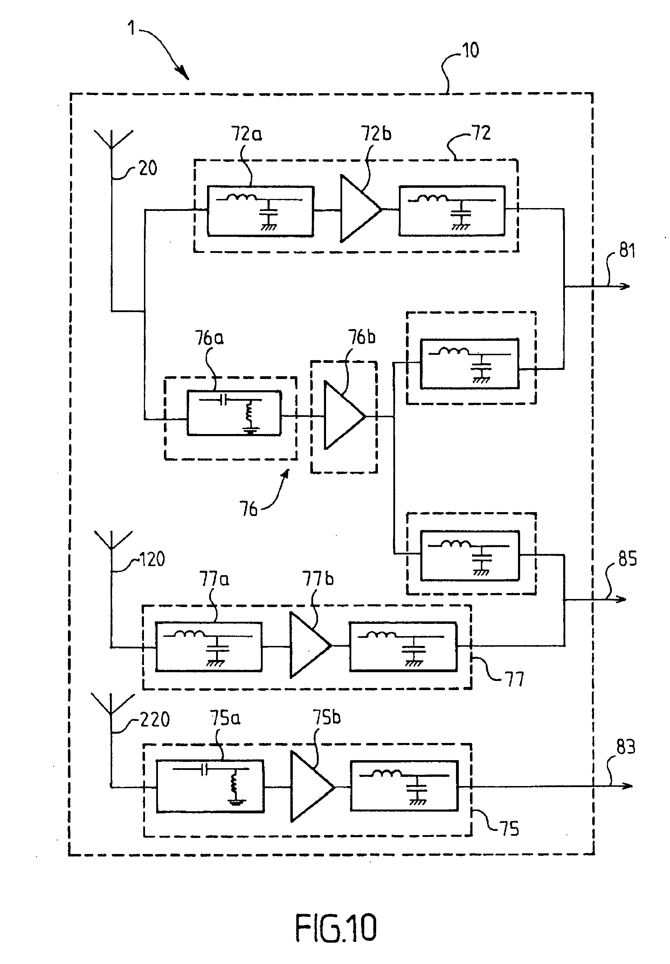

Enfin, une extension du système précédent consiste à réaliser, dans une seule antenne, les applications de radio analogique AM/FM, de radio numérique DAB (bande L et III) et de télévision numérique terrestre DVB-H. La figure 10 illustre ce neuvième mode de réalisation.

L'antenne 1 de la figure 10 comporte ainsi un premier aérien 20 qui permet la réception de la radio analogique AM, de la radio analogique FM et de la radio numérique DVB en bande III, un deuxième aérien 120 qui permet la réception de la radio numérique DAB en bande L, et un troisième aérien 220 qui permet la réception de la télévision numérique terrestre DVB-H. Le premier aérien 20 est relié à deux circuits électroniques 72 et 76 comportant respectivement un adaptateur d'impédance 72a et un amplificateur 72b pour la réception du signal radio AM et un adaptateur d'impédance 76a et un amplificateur 76b pour la réception du signal de radio FM et du signal radio numérique DAB en bande III. Le second aérien 120 est relié à un unique circuit électronique 77 comportant un adaptateur d'impédance 77a et un amplificateur 77b pour la réception du signal radio numérique DAB en bande L. le troisième aérien 220 est relié à un unique circuit électronique 75 comportant un adaptateur d'impédance 75a et un amplificateur 75b pour la réception du signal de télévision numérique terrestre DVB-H. En sortie, l'antenne 1 comporte un câble 81 pour la radio AM/FM, un câble 85 pour la radio numérique DAB en bande III et L et un câble 83 pour la télévision DVB-H.

Il va de soi que la description détaillée de l'objet de l'Invention, donnée uniquement à titre d'illustration, ne constitue en aucune manière une limitation, les équivalents techniques étant également compris dans le champ de la présente invention.

Ainsi, l'antenne peut également être utilisée pour des communications à la norme Bluetooth ou Wifi/Wimax. A cet effet, la carte électronique pourra être pourvue des composants correspondants qui sont disponibles dans le commerce.

L'antenne peut être une antenne passive.

Bien entendu, il est possible de combiner toutes les solutions et notamment la téléphonie avec seulement la radio numérique DAB (bande L et III), la téléphonie avec la télévision numérique terrestre DVB-H, ou encore la téléphonie avec la radio analogique AM/FM, la radio numérique DAB (bande L et III) et la télévision numérique terrestre DVB-H.

Le nombre de répétition du motif décrit en relation avec la figure 1 peut être supérieur ou inférieur à 12 selon l'application et la bande fréquences du signal émis/reçu.

Le fil formant l'aérien peut être en pâte d'argent.

La fibre de verre formant le support diélectrique peut être remplacée remplacé par du Polyéthylène Téréphtalate (PET) PET ou une matière plastique composite.

L'amplificateur de signal n'est pas obligatoire, notamment pour des antennes de grande dimension.

## Revendications

1. Antenne multibande (1) pour véhicule automobile comprenant au moins un aérien (20 ; 120 ; 220) porté par un support diélectrique (10) monté sur un véhicule et un circuit électronique (5) comportant un module de réception/émission (30) adapté pour recevoir/émettre un signal électromagnétique ayant une fréquence située dans au moins une bande de fréquences déterminée et un module (40) pour adapter l'aérien à la bande de fréquences déterminée du signal reçu/émis, le circuit électronique étant relié à un appareil récepteur/émetteur monté dans le véhicule, et le circuit électronique (5) étant monté sur le support diélectrique (10) et forme une seule pièce avec celui-ci, **caractérisée en ce que** le support diélectrique (10) est rectangulaire et comporte des premiers et seconds cotés transversaux (11, 13) mesurant chacun environ 35 mm, des premier et second côtés longitudinaux (12, 14) mesurant chacun environ 130 mm, son épaisseur étant d'environ 0,8 mm tandis que la largeur du fil photogravé est d'environ 0,4 mm, et **en ce que** l'aérien comporte deux parties (21, 23) disposées symétriquement de part et d'autre de l'axe longitudinal de symétrie (15) du support (10) et son fil forme des méandres constitués par un motif comprenant, successivement,
- un premier tronçon transversal (21a), parallèle au premier côté transversal (11) du support, prenant son origine avant son axe longitudinal (15) et dirigé vers le premier côté longitudinal (12),
- un premier tronçon longitudinal (22a) parallèle et adjacent au premier côté longitudinal (12) du support et dirigé vers le second côté transversal (13),
- un premier tronçon transversal (23a) parallèle et adjacent au second côté transversal (13) du support et dirigé vers le second côté longitudinal (14),
- un premier tronçon longitudinal (24a) parallèle et adjacent au second côté longitudinal (14) du support et dirigé vers le premier côté transversal (11),
- un premier tronçon transversal (25a) parallèle au premier coté transversal (11) du support et prenant fin avant l'axe longitudinal (15),
- une première portion (26a) de tronçon longitudinal parallèle et adjacente à l'axe longitudinal (15) et partant vers le centre (C) du support,
- un second tronçon transversal (25b) parallèle au premier coté transversal (11) du support, dirigé vers le second côté longitudinal (14) et se terminant avant le premier tronçon longitudinal (24a) parallèle au second côté longitudinal (14),
- un second tronçon longitudinal (24b) parallèle au second côté longitudinal (14) du support, dirigé vers le second côté transversal (13) et se terminant avant le premier tronçon transversal (23a) parallèle au second côté transversal (13),
- un second tronçon transversal (23b) parallèle au second côté transversal (13) du support, dirigé vers le premier côté longitudinal (12) et se terminant avant le premier tronçon longitudinal (22a) parallèle au premier côté longitudinal (12),
- un second tronçon longitudinal (22b) parallèle au premier côté longitudinal (12) du support, dirigé vers le premier côté transversal (11) et se terminant avant le premier tronçon transversal (21a) parallèle au premier côté transversal (11),
- un second tronçon transversal (26b) parallèle au premier côté transversal (11) du support, dirigé vers le second côté longitudinal (14) et prenant fin avant l'axe longitudinal (15),
- une seconde portion (26b) de tronçon longitudinal parallèle et adjacente à l'axe longitudinal (15) et partant vers le centre (C) du support,
- l'ensemble des seconds tronçons longitudinaux et transversaux (21b, 22b, 23b, 24b, 25b) étant situé à l'intérieur de l'ensemble des premiers tronçons longitudinaux et transversaux (21a, 22a, 23a, 24a, 25a) et chaque motif se répétant plusieurs fois en direction du centre (C) du support, de préférence douze fois

2. Antenne selon la revendication 1, **caractérisée en ce que** le circuit électronique (5) est protégé par un revêtement en matière plastique surmoulée.

3. Antenne selon la revendication 1 ou 2, **caractérisée en ce que** l'aérien (20 ; 120 ; 220) est adapté pour recevoir/émettre des signaux électromagnétiques dans une bande de fréquences sélectionnée pour la réception d'un signal radio analogique FM, dans une bande de fréquences sélectionnée pour la réception d'un signal radio analogique AM et dans l'une au moins des fréquences parmi :
- une bande de fréquences sélectionnée pour la réception d'un signal de télévision numérique ;
- une bande de fréquences sélectionnée pour la réception d'un signal de radio numérique DAB en bande L et/ou une bande de fréquences sélectionnée pour la réception d'un signal de radio numérique DAB en bande III,
- au moins une bande de fréquences sélectionnée pour la réception/l'émission d'un signal de téléphonie cellulaire GSM.

4. Antenne selon la revendication 3, **caractérisée en ce que**, lorsqu'elle est adaptée pour la réception de la télévision numérique, le circuit électronique comprend un seul amplificateur (74b) prévu pour traiter à la fois le signal de télévision numérique et le signal de radio analogique FM.

5. Antenne selon la revendication 3 ou 4, **caractérisée en ce que**, lorsqu'elle est adaptée pour la réception de la télévision numérique, elle comprend un aérien (20) conçu pour la réception du signal de radio analogique AM/FM et un aérien distinct (120) conçu pour la réception du signal de télévision numérique.

6. Antenne selon la revendication 3, **caractérisée en ce que**, lorsqu'elle est adaptée pour la réception de la radio numérique DAB en bande L et en bande III, le circuit électronique comprend un amplificateur (76b) prévu pour traiter à la fois le signal de radio numérique DAB en bande III et le signal de radio analogique FM, et un amplificateur distinct (77b) prévu pour traiter le signal de radio numérique DAB en bande L.

7. Antenne selon la revendication 3 ou 6, **caractérisée en ce que**, lorsqu'elle est adaptée pour la réception de la radio numérique DAB en bande L et en bande III, elle comprend un aérien (20) conçu pour la réception à la fois du signal de radio analogique AM/FM et du signal de radio numérique DAB en bande III, et un aérien distinct (120) conçu pour la réception du signal de radio numérique DAB en bande L.

8. Antenne selon la revendication 3, **caractérisée en ce que**, lorsqu'elle est adaptée pour la réception/l'émission du signal de téléphonie cellulaire GSM, elle comprend un aérien (20) conçu pour la réception du signal de radio analogique AM/FM et un aérien distinct (120) conçu pour la réception/l'émission du signal de téléphonie cellulaire GSM.

9. Antenne selon la revendication 3, **caractérisée en ce que**, lorsqu'elle est adaptée pour la réception de la radio numérique DAB en bande L et en bande III et pour la réception de la télévision numérique, elle comprend un aérien (20) conçu pour la réception à la fois du signal de radio analogique AM/FM et du signal de radio numérique DAB en bande III, un aérien distinct (220) conçu pour la réception du signal de télévision numérique et un autre aérien distinct (120) conçu pour la réception du signal de radio numérique DAB en bande L.

10. Antenne selon l'une quelconque des revendications 3 à 9, **caractérisée en ce qu'**elle comporte un composant électronique selfique (50) monté en série avec l'aérien (20 ; 120 ; 220) pour optimiser la résonance et adapter l'impédance de l'antenne à 50 Ohms dans au moins une bande de fréquences déterminée, et de préférence dans deux bandes de fréquences distinctes.

11. Antenne selon l'une quelconque des revendications précédentes, **caractérisée en ce que** le support diélectrique (10) est en fibres de verre et l'aérien (20 ; 120 ; 220) est constitué par un fil conducteur en cuivre photogravé sur le support (10).

12. Antenne selon l'une quelconque des revendications précédentes, **caractérisée en ce que** l'aérien (20 ; 120 ; 220) est relié au circuit électronique (5) par un tronçon d'entrée (28) sensiblement aligné avec l'axe longitudinal (15) du support (10), et l'espace entre deux tronçons adjacents de l'aérien mesure environ 0,37 mm.

13. Antenne selon la revendication 12, **caractérisée en ce que** le circuit électronique (5) comprend trois composants de filtrage (60) formant un T de manière à adapter l'impédance de l'antenne à 50 Ohms sur toute la bande de fréquences du signal de radio analogique FM.

14. Antenne selon l'une quelconque des revendications précédentes, **caractérisée en ce que** l'appareil récepteur/émetteur est choisi dans le groupe constitué d'un autoradio à réception analogique et/ou numérique, un téléphone cellulaire, un appareil de positionnement global par satellites, un équipement à la norme bluetooth et un récepteur de télévision embarqué.
